# EUROPEAN PATENT APPLICATION

(11) **EP 2 103 447 A1**
(43) Date of publication of application: **23.09.2009**
(21) Application number: 09155598.7
(22) Date of filing: 19.03.2009
(51) Int. Cl.: B42D 15/10, B44C 1/24

(54) **An article having differing surface finishes and a lamination plate and a method for its production**

(30) Priority: 19.03.2008 GB 0805160
(71) Applicant: Cardel Limited, Baldock Hertfordshire SG7 6XL (GB)
(72) Inventor: Lamb, Elliot, Harpenden Hertfordshire AL5 2PT (GB)
(74) Representative: Bennett, Adrian Robert J.

(57) **Abstract**

The application relates to an article, for example a credit card, having areas of differing gloss provided on its surface. The different gloss areas may form a security feature for the card. The application also relates to a lamination plate (2) for forming such an article, and to a method for producing differing surface finishes on an article.

## Description

The invention relates to an article, such as a lamina, having areas of differing surface finish provided on its surface, and particularly, but not exclusively, to such an article wherein the differing surface finishes form a security feature. The invention also relates to a lamination plate for forming such an article and to a method of producing two different surface finishes on an article.

Security is an important consideration in the field of financial transaction cards (e.g. credit/debit cards) and personal identification documents. In order to help prevent fraud, it has long been known to include a security feature, for example in the form of a hologram, when producing these articles, so that they are less easily reproducible. Features previously developed to assist in preventing fraud include machine readable features such as microchips, magnetic stripes and barcodes, "open" visual security features such holograms and lenticular images and covert visual features such as UV printing.

The security of articles such as Banking and other cards has, therefore, been achieved by a plurality of security features creating a series of barriers to counterfeiting. However, the industry is always looking for new security features and methods of application of such features to stay ahead of the counterfeiters. For example, features that are incorporated during the early principal manufacturing steps of card body manufacture are likely to be harder to replicate on a final card.

Holograms, for example, are typically produced as a separate element and applied to only a small area of a finished card. Once obtained, holograms are comparatively easily applied to non-genuine cards.

The above problem would be avoided if a design could be applied to a physical article during production. The design could act as a security feature that is integral to the surface of, for example, a credit card body, not applied as a separate element.

According to a first aspect of the present invention there is provided an article having a unitary surface comprising at least two areas of differing surface finish to provide areas of differing gloss level on the surface.

By using differing surface finishes on different areas of a unitary surface, a design can be created, preferably during the manufacture of an article, as part of the article's surface. Because the design is incorporated into the surface, it is impossible for the design of one article to be removed and applied to another article. Therefore, the design provides an effective visual security feature for the article to which it is applied. The design can be made as simple or intricate as desired, and may be aligned with previous printing of the article to form a combined image. Typically the printing will be provided by dye sublimation, digital printing, thermal printing or other known methods onto a core over which is provided a further layer. This further layer may be substantially transparent on application or may become transparent during further process steps such as heating. It may comprise a thin plastics film, for example of PVC, or a coating of varnish or lacquer applied on top of the printed design. Although not essential, the additional layer serves to protect the printed layer and improve durability of the finished article. Furthermore, if the aforementioned surface finish is applied to the through physical contact with a plate, the further layer has the additional advantage of preventing the transfer of parts of the printed design to the plate. The application of heat with a plate enables a high gloss finish to be provided to the further layer.

The article may be a lamina, and preferably comprises a plastics material, and may form the basis of an article such as a bank card (for example a credit/debit card), a personal identification or access card, a plastic passport page (such as those containing biometric and other data) or any other article. In many cases these articles are formed from a purely plastics material such as polycarbonate, but in some instances composites or hybrid materials such as Teslin (RTM) may be used.

By providing different qualities of surface finish on a surface, the ratio of reflected light to scattered light can be varied. This variation gives the impression of higher or lower levels of gloss to an observer. In the simplest example, a near perfectly smooth surface will reflect nearly all light that impacts on it, providing a mirror-like gloss finish. In contrast, a rough surface will scatter a large amount of the impingent light and provide a, largely nonreflective, matt finish. Surface finishes between these two extremes will provide intermediate levels of sheen on the surface, and may be referred to as silk finishes.

A gloss finish, corresponding to gloss level of 500-1200GU at 20°, can be obtained by providing a surface finish/texture of 0.01-0.1µm Rₐ. A matt finish, corresponding to a gloss level of 1-10GU at 85° or 10-50GU at 60°, can be obtained by providing a surface finish of 1-3µm Rₐ. In between these values, a silk finish having a gloss level of 50-300GU at 60° is obtainable by providing a surface finish of 0.1-1µm Rₐ. Each of the three broad categories of finish identified above does, of course, encompass a large number of finishes which can be selectively provided by selecting a particular Rₐ value. A key benefit of the invention is the ability to easy provide a particular surface finish as required.

At least two, and preferably three or more different surface finishes may be provided on the surface of an article to produce a pattern on the surface. For example, a silk finish could be applied to the majority of the surface, with details or features 'picked out' in a gloss finish. Alternatively, the majority of the surface could have a matt finish with the features in silk and/or gloss finish. Other combinations are also possible.

The surface of the article with the design comprising two or more surface finishes applied is preferably planar to within ten microns, ideally to within five microns or less. This allows the surface of the article to remain essentially flat after the design is applied, making subsequent printing or thermal personalisation possible. The printing may be by thermal printing, dye sublimation, digital printing or by other suitable methods. Furthermore, if the surface remains sufficiently planar, the design will not prevent embossing, magnetic strip encoding, or the incorporation of microchips (either contact type or contactless) or other personalisation features including embossing, hot stamping of holograms and the application of signature strips an the like, which can prove problematic when raised or recessed features are applied to a card surface. By maintaining the possibility of including personalisation features, can be applied to, for example, standard bank cards suitable for personalisation by the customer.

The surface finish/design may be applied to an article, such as a plastics card, through a physical process, preferably through softening or melting the surface of the article in contact with a further component to transfer a finish therefrom. The softening may be achieved by the application of heat to either the further component or to the article itself, or alternative means such as microwaves may be used. The process may take place with the application of little or no pressure, but some pressure may be beneficial to aid the transfer of a design from said further component to the surface of the article as it is softened or melted. Said further component may be a metal plate with a design comprising at least two different surface finishes, such as a lamination plate, and/or may contact the entirety of the surface of the article to which a design is to be applied. It is preferable, although not essential, that the process of applying the finish/design is performed when pressing a number of layers of material together and bonding them as part of a lamination process, perhaps during the formation of a credit card or similar.

The manufacture of articles such as credit cards, identity cards, passport data pages and the like, commonly comprises a lamination step where various layers of the card or other article are joined together. Typically, many surface design or security features are applied after the lamination step in a separate process so that the lamination process does not damage or otherwise affect the design and/or security feature, and to minimise scrap. It would be beneficial if it were possible to provide an additional design or security feature on a card or other article during the lamination process.

A further aspect of the present invention provides a lamination plate having a surface with at least two areas of differing surface finish such that, in use, the lamination plate creates corresponding areas of surface finish on a surface of an article during a lamination process.

The surface finishes may be as previously described in relation to the articles themselves and, once again, further different surface finishes may also be incorporated. The surface finishes are typically achieved through chemical ablation or mechanical peening, but other methods are also suitable. By using a lamination plate as described, a design can be applied, for example to the surface of a card, during a lamination process. This allows a design to be applied as part of the standard manufacture of a card or other article, and avoids the need for a further step in the manufacturing process. In addition, datum pins may be incorporated within the lamination plate to align or register a design on the plate with a corresponding design printed on, for example, a sheet of cards, to create a combined image or appearance for each finished card.

A yet further aspect of the present invention provides a method of forming two differing surface finishes on an article, in particular an article as previously described, comprising the steps of applying a plate having a surface with at least two areas of differing surface finish to an article, and softening at least the surface of the article in contact with the plate such that said finishes are transferred to the surface of the article.

The softening is preferably achieved though the application of heat, or through the use of microwaves. The plate is preferably a lamination plate as described above, and is preferably applied so as to contact the entire surface of the article being produced.

In order to achieve the levels of gloss required, it is preferable that the surface of the article to which the design is being applied is heated to a temperature higher than its glass transition temperature (T_{G}). For the plastics materials typically used in ISO card manufacture, T_{G} is generally in the range of 70°C - 100°C. When the transfer of the design takes place as part of a lamination process, the temperatures used will be higher, but temperatures typically used in lamination, e.g.120 °C - 200°C, can safely be used without adversely affecting the surface finish achievable. Where higher temperatures are used, it has been found that the rougher matt surface finishes can be beneficial in preventing flow of the plastics material in contact with the plates, as can be a problem with conventional smooth plates.

A better understanding of the present invention will be obtained from the following detailed description. The description is given by way of example only and makes reference to the accompanying drawings in which:
Figure 1 is a plan view of an area of a lamination plate according to one aspect of the present invention;
Figure 2 is a plan view of an area of an alternative lamination plate according to the present invention;
Figure 3 is a plan view of a credit card according to a further aspect of the present invention; and
Figure 4 is a schematic plan view of a complete lamination plate comprising an array of areas as shown in Figure 2.

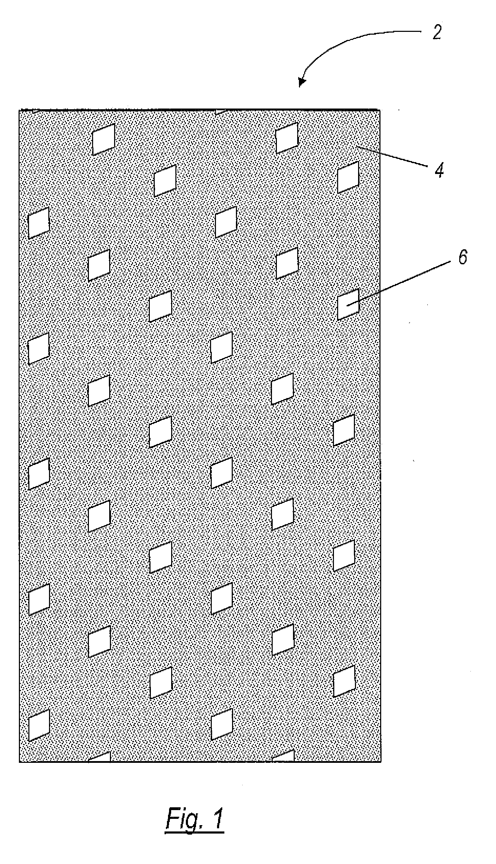

Figure 1 shows a close up of a small area of a first lamination plate 2 according to the present invention. The lamination plate 2 comprises a repeating design made up of two different surface finishes. The design comprises a background 4 with a number of diamonds 6 picked out as details. The background 4 of the design has a surface finish of approximately 0.5µm Rₐ, which gives a silk finish to the majority of the card. The diamonds 6 have a much smoother surface finish of approximately 0.02µm Rₐ, giving the details of the design a gloss finish. The view of Figure 1 has been greatly enlarged so as to show the design of the plate clearly. In reality, the diamonds 6 could be no more that 1 mm in length, allowing over one thousand to be present on an area the size of a typical credit card.

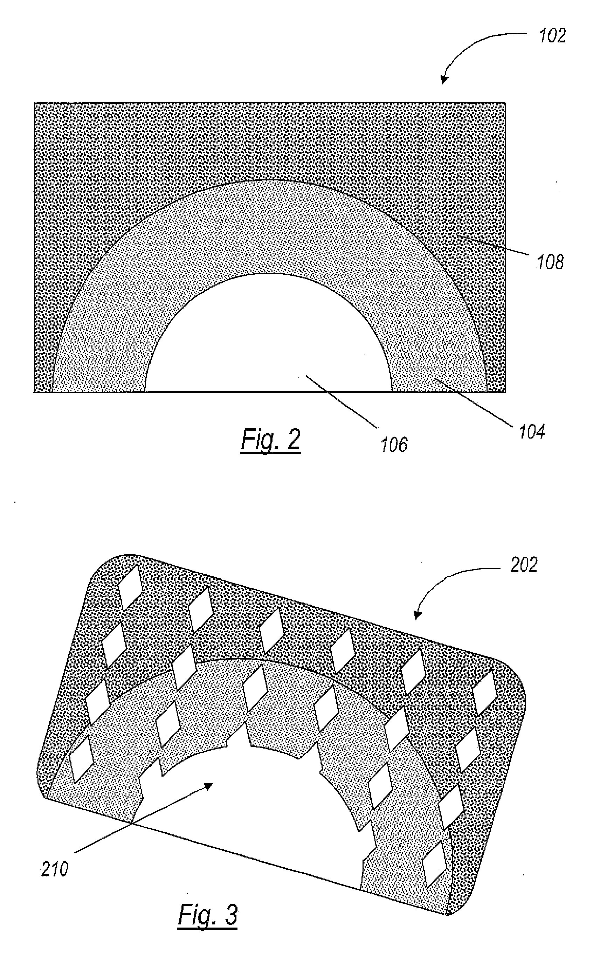

Figure 2 shows an area 102 of an alternative lamination plate according to the present invention. In contrast to the repeating pattern provided on the lamination plate 2 of Figure 1, the lamination plate area 102 of Figure 2 comprises a self contained design made up of three different surface finishes. The design is sized to fit on the surface of a standard ISO plastic card, and shows a simplified rising sun 106 in a gloss finish, with the area 104 immediately around the rising sun in a silk finish. The surface finishes of the gloss 106 and silk 104 areas are as described in relation to Figure 1. The background 108 of the rising sun design shown in Figure 2 has a further different surface finish. The background 108 of the lamination plate area 102 is rougher than the other areas of the design, having a surface finish of approximately 2µm Rₐ. This gives the background 108 of the design a matt appearance, which is distinguishable from the gloss and silk finishes previously described.

The designs shown in Figures 1 and 2 are merely to illustrate the concept of the present invention. More complex designs are, of course, possible. For example, company specific logos or other graphics could be incorporated using the same technique.

Although a number of methods may be suitable, the various surface finishes are typically applied to the plates through chemical ablation (or etching) or mechanical peening of the surface in question. Both methods are well understood by those skilled in the art, and will not be discussed in detail here. In either case, the areas of a plate which are to have a smooth, gloss, finish are masked, or otherwise protected, before the ablation or peening process is begun, and are subsequently revealed. This provides a surface with two different finishes. A third level of surface finish can be achieved by masking further areas of the design immediately after the first ablation or peening step, and then applying a further, rougher, ablation or peening step before uncovering either the smooth gloss sections or intermediate silk sections. Through the use of further cycles of this type, a number of different surface finishes can be provided on the finished plate.

When lamination plates incorporating designs as shown in Figures 1 and 2 are used in the manufacture of cards, plastic passport pages or other articles, the various surface finishes, and therefore the designs, are transferred to the article being manufactured. In the lamination process the material being laminated is softened, for example by heating the material directly or indirectly. The softening of the material causes the surface in contact with the lamination plate to conform to the lamination plate, allowing transfer of the design from the lamination plate onto the surface of the article being laminated. Pressure is also applied to the material over a period of time to join the layers of the laminate together, and this can be beneficial in transferring the design. Thus, designs, for decoration and/or for security purposes, may advantageously be transferred to a unitary surface during manufacture of a plastic card or similar.

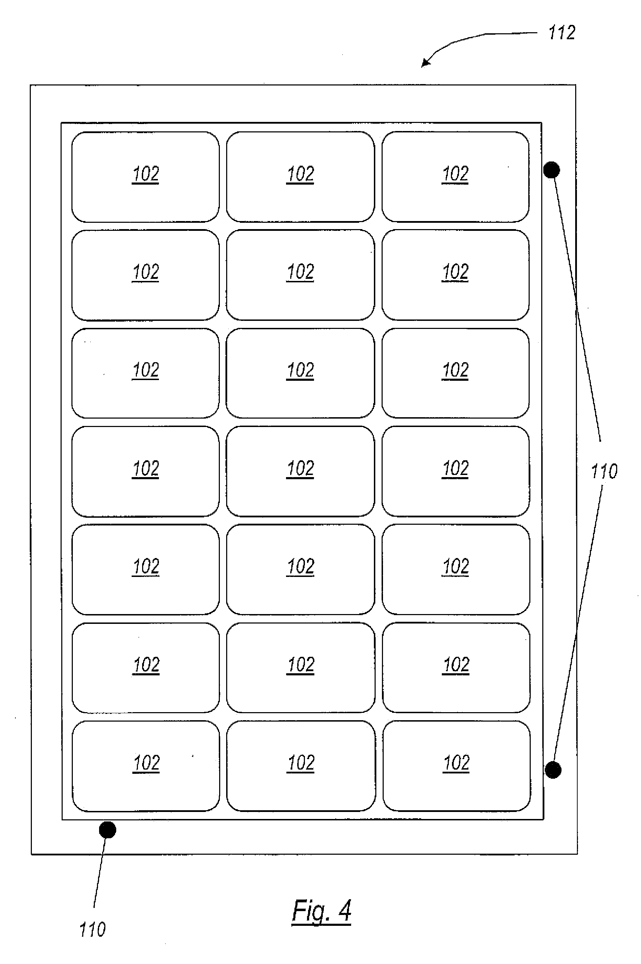

In order that the design shown in Figure 2 can be simultaneously applied to a large number of, for example, credit cards; a complete lamination plate would, in practice, comprise a number of areas 102 as shown in Figure 2. Such a lamination plate 112, suitable for producing twenty-one cards, is shown schematically in Figure 4. The plate 112 would be used to laminate a large sheet of material, typically a plastics material, which would subsequently be divided up to form the individual cards.

Each image of the rising sun on the lamination plate 112 may need to be aligned with a corresponding printed image already present on the sheet of material. Accordingly, the lamination plate 112 of Figure 4 comprises three datum pins 110. Typically, so called "grip and lay" edges of the printed card sheet are positioned against the datum pins 110 to accurately position each printed area relative to a corresponding plate feature prior to lamination. Although three datum pins 110 are shown in Figure 4, the number and/or location of the pins 110 may be varied to suit specific requirements.

Details of the lamination process itself are well understood by those skilled in the art and, accordingly, will not be discussed here.

Figure 3 shows a credit card 202 in accordance with a further aspect of the present invention. The credit card 202 has a surface design 210 comprising the sun motif of Figure 2, along with a diamond pattern similar to that shown in Figure 1. The design 210 comprises the same three surface finishes as previously described in relation to the lamination plate areas 2,102 of Figures 1 and 2. The design may be applied to the card 202 by any number of suitable processes, but in the example shown the design is formed on the card 202 during the lamination process by using a lamination plate similar to those described with reference to Figures 1, 2 and 4. The surface finishes applied to the lamination plate are simply transferred to the card 202 as the lamination takes place.

The various surfaces finishes of design 210 still leave the card 202 of Figure 3 with a surface which is planar to within 5 microns. This allows subsequent printing (for example dye sublimation or thermal printing) on the surface of the card 202 to form a further part of the design and/or security feature. The card 202 may also be subsequently subjected to embossing, magnetic strip encoding and/or other personalisation. Such personalisation can often be problematic if one or more raised features are present on the surface of a card.

The various surface finishes applied to the lamination plates 2,102 and card 202 described above each comprise a random distribution of high and low points. It is equally possible, however, that the surface roughness could be achieved through the use of a regular network of high and low points, or by a series of ridges and troughs.

The invention is not considered to be limited to the configurations and materials described above. Furthermore, the patterns/designs shown are merely illustrative and are not considered to limit the protection sought. For example, a further design may comprise a cube viewed from a vertex, the three visible faces of the cube each being provided in one of three surface finishes. The design may be aligned to a pre-printed image of the cube in, for example, red, green and blue. Alternatively, or additionally, printing may be applied after the surface finish is produced.

The principles of the invention as described above are equally applicable to all types of cards and identification documents, and may be achieved using alternative suitable materials and processes as a particular situation requires.

## Claims

1. An article, such as a credit or debit card, having a unitary surface comprising at least two areas of differing surface finish to provide areas of differing gloss level on the surface, the article preferably comprising a plastics material.

2. An article according to claim 1, wherein a third area of different gloss level is provided by a further different surface finish.

3. An article according to any of claims 1 or 2, wherein one surface finish is in the range of 0.01-0.1µm Rₐ, 0.1-1µm Rₐ or 1-3µm Rₐ.

4. An article according to any of the preceding claims, wherein the surface is smooth to within 10µm, preferably within 5µm.

5. An article according to any of the preceding claims, further comprising a printed design.

6. An article according to claims 5, wherein the printed design is applied to a core of the article over which is provided a further layer which forms the surface of the article.

7. An article according to any of the preceding claims, wherein the surface finishes are created by softening at least the surface of the article, preferably during a lamination process.

8. A lamination plate having a surface with at least two areas of differing surface finish such that, in use, the lamination plate creates corresponding areas of surface finish on a surface of an article during a lamination process.

9. A lamination plate according to claim 8, wherein a third area of different surface finish is provided.

10. A lamination plate according to claim 8 or 9, wherein the at least two surface finishes are created by mechanical peening or chemical ablation.

11. A lamination plate according to any of claims 9 to 11, further comprising datum pins.

12. A method of forming two differing surface finishes on an article, in particular an article according to any of claims 1 to 8, comprising the steps of applying a component having a surface with at least two areas of differing surface finish to an article, and softening at least the surface of the article in contact with the component such that said finishes are transferred to the surface of the article.

13. A method according to claim 12, wherein the softening step is achieved by heating at least the surface of the article.

14. A method according to claim 12 or 13, wherein the component is a lamination plate according to one of claims 8 to 11.

15. A method according to any of claims 12 to 15, wherein the component contacts the entire surface of the article.
